(19) Europäisches Patentamt / European Patent Office / Office européen des brevets

(11) **EP 3 270 199 B1**

(12) **EUROPEAN PATENT SPECIFICATION**

(45) Date of publication and mention
of the grant of the patent:
**06.07.2022 Bulletin 2022/27**

(21) Application number: **16764636.3**

(22) Date of filing: **22.02.2016**

(51) International Patent Classification (IPC):
**G02B 6/14** *(2006.01)*   **G02B 6/028** *(2006.01)*
**G02B 6/036** *(2006.01)*   **C03C 25/10** *(2018.01)*
**G02B 6/02** *(2006.01)*   **G02B 6/44** *(2006.01)*
**C03B 37/027** *(2006.01)*   **C03C 25/47** *(2018.01)*

(52) Cooperative Patent Classification (CPC):
**G02B 6/0288; C03B 37/02745; C03C 25/47;
G02B 6/02047; G02B 6/03611;** G02B 6/02395;
G02B 6/4484

(86) International application number:
**PCT/JP2016/055056**

(87) International publication number:
**WO 2016/147806 (22.09.2016 Gazette 2016/38)**

(54) **METHOD FOR MANUFACTURING AN OPTICAL FIBER**

VERFAHREN ZUR GLASFASERHERSTELLUNG

MÉTHODE DE FABRICATION DE FIBRE OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.03.2015 JP 2015051376**

(43) Date of publication of application:
**17.01.2018 Bulletin 2018/03**

(73) Proprietor: **Fujikura Ltd.**
**Tokyo 135-8512 (JP)**

(72) Inventors:
• **MARUYAMA Ryo**
**Sakura-shi, Chiba 285-8550 (JP)**
• **KUWAKI Nobuo**
**Koto-ku, Tokyo 135-8512 (JP)**

(74) Representative: **Plasseraud IP**
**66, rue de la Chaussée d'Antin**
**75440 Paris Cedex 09 (FR)**

(56) References cited:
**WO-A1-2014/132763     JP-A- 2014 509 410
JP-A- 2014 530 374     US-A- 4 372 645
US-A1- 2008 141 723**

• JIN X Q ET AL: "Linearly polarized mode division multiplexed transmission over ring-index multimode fibres", 2013 IEEE PHOTONICS SOCIETY SUMMER TOPICAL MEETING SERIES, IEEE, 8 July 2013 (2013-07-08), pages 113-114, XP032491874, DOI: 10.1109/PHOSST.2013.6614512 [retrieved on 2013-09-27]
• NICOLAS K. FONTAINE ET AL.: 'Experimental Investigation of Crosstalk Accumulation in a Ring-Core Fiber' 2013 IEEE PHOTONICS SOCIETY SUMMER TOPICAL MEETING SERIES 2013, pages 111 - 112, XP032491876
• AKIRA IGARI ET AL.: 'An analysis of transmission characteristics of homogeneously coupled-three-core fiber based on full-vector finite-element method and coupled field theory' IEICE TECHNICAL REPORT vol. 114, no. 453, 12 February 2015, pages 121 - 126, XP055312195
• HO KEANG-PO ET AL: "Linear Propagation Effects in Mode-Division Multiplexing Systems", JOURNAL OF LIGHTWAVE TECHNOLOGY, IEEE, USA, vol. 32, no. 4, 1 February 2014 (2014-02-01), pages 614-628, XP011537154, ISSN: 0733-8724, DOI: 10.1109/JLT.2013.2283797 [retrieved on 2014-01-13]

**Description**

TECHNICAL FIELD

The present invention relates to an optical fiber for large-capacity transmission which is used in an information communication field, and a method of manufacturing an optical fiber.
Priority is claimed on Japanese Patent Application No. 2015-051376, filed March 13, 2015.

BACKGROUND ART

In optical transmission, with the development of wavelength division multiplexing (WDM), a digital coherent technique, and the like, transmission capacity significantly increases. The amount of traffic of a core network increases at an annual rate of 30% or more, and it is considered that large-capacity transmission in excess of 100 Tbps will be required in the future.
If such large-capacity transmission is assumed, and taking a fiber fuse or the like into consideration, an existing transmission technique using a single mode fiber will eventually reach its limit.
In order to move beyond such limits, innovative technical development of an optical fiber as a transmission medium as well as a system is essential. For this reason, various new transmission mediums have been reported.
As one of the new transmission techniques, "mode division multiplexing (MDM) transmission" in which a Few-Mode fiber (FMF) allowing a plurality of modes to be propagated is used in a transmission line and putting a signal on each mode to achieve multiplexing has been attracting attention in recent years.
In the MDM transmission, since mode coupling is generated in a mode multiplexer/demultiplexer and the FMF itself, one signal is included in the other signal as noise, thereby causing signal deterioration. Accordingly, as a measure against signal deterioration due to mode coupling, Multiple-Input-Multiple-Output (MIMO) in which a signal is restored based on information on a transmission/reception side is assumed to be applied.
It is known that the higher an inter-mode group delay time difference (DMD) of the FMF, the greater a signal processing computation amount of MIMO, and if the DMD is great, signal processing is not fast enough. For this reason, in the MDM transmission using MIMO, there is demand for development of an FMF with a small DMD.
As means for reduction in DMD, a compensation transmission path, a low DMD fiber, and the like are suggested. A compensation transmission path is described in NPLs 1 and 2. The low DMD fiber is described in NPLs 3 to 5.

PRIOR ART DOCUMENTS

[NPL 1] T. Sakamoto, et al., "Differential Mode Delay Managed Transmission Line for Wide-band WDM-MIMO System," OFC/NFOEC 2012 OM2D.1, 2012.
[NPL 2] S. Randel, et al., "Mode-Multiplexed 6×20-GBd QPSK Transmission over 1200-km DGD-Compensated Few-Mode Fiber," OFC/NFOEC 2012 PDP5C.5, 2012.
[NPL 3] R. Maruyama, et al., "Novel two-mode optical fiber with low DMD and large Aeff for MIMO processing," OECC 2012, PDP2-3, 2012.
[NPL 4] T. Mori, et al., "Six-LP-mode transmission fiber with DMD of less than 70 ps/km over C+L band," OFC 2014, M3F.3, 2014.
[NPL 5] P. Sillard, et al., "Low-DMGD 6-LP-Mode Fiber," OFC 2014, M3F.2, 2014.
[NPL 6] S. Warm, et al., Optics Express, vol. 21, no. 1, pp. 519-532, 2013
[NPL 7] Nicolas K. Fontaine, et al., Summer Topicals 2013, TuC4.2
[NPL 8] Jin X Q et al., "Linearly polarized mode division multiplexed transmission over ring-index multimode fibres", 2013 IEEE PHOTONICS SOCIETY SUMMER TOPICAL MEETING SERIES, 8 July 2013, pp 113-114.

DISCLOSURE OF INVENTION

PROBLEMS TO BE SOLVED BY THE INVENTION

However, in a compensation transmission path, desired DMD characteristics may not be obtained. Furthermore, since a compensation transmission path has a structure in which two optical fibers are connected, the DMD may become larger due to mode conversion generated at a connection point of the two optical fibers (see NPL 6). A compensation transmission path may also not be preferable from the viewpoint of complexity of the structure.
Furthermore, even in a low DMD fiber, desired DMD characteristics may not be obtained.

In addition, a technique which attempts to make the DMD small using an optical fiber in which coupling between modes (mode coupling) is increased has been reported (see NPL 7).

However, in NPL 7, an example where the DMD is made sufficiently small is not disclosed. Specifically, a quantitative index, such as the amount of coupling between the modes, and necessary characteristics of an optical fiber for obtaining the amount of mode coupling, is not disclosed. Mode coupling values up to 5 dB are disclosed in NPL8.

The invention has been accomplished in consideration of the above-described situation, and an object of the invention is to provide a method of manufacturing an optical fiber capable of reliably and sufficiently reducing a DMD.

MEANS FOR SOLVING THE PROBLEMS

An optical fiber according to a non-claimed first aspect allows propagation of two or more modes, and in a case where a mode coupling coefficient between at least two modes among the two or more modes is h [1/km], the length of the optical fiber is z [km], and the amount XT of coupling between the two modes is represented by $XT = 10 \cdot \log_{10}(zh)$ [dB], the amount XT of coupling satisfies Expression (A) described below.

$$XT \geq +14 \ [dB] \ \dots \ (A)$$

The effective refractive index difference between the two modes may be equal to or less than $1.0 \times 10^{-3}$.

A refractive index profile may have a ring shape.

The amount of coupling between the modes may satisfy Expression (A) by a span as plastic deformation generated by applying force around an axis to the optical fiber.

The amount of coupling between the modes may satisfy Expression (A) by applying tension to the optical fiber.

The amount of coupling between the modes may satisfy Expression (A) by a coating layer formed on the outer circumference of the optical fiber.

A method of manufacturing an optical fiber according to a second aspect part of the claimed invention is defined in claim 1.

A method of manufacturing an optical fiber according to a third aspect part of the claimed invention is defined in claim 2 and its dependent claim 3.

EFFECTS OF THE INVENTION

According to the above-described aspects, since the amount of mode coupling between the two modes is equal to or greater than +14 [dB], in the normalized impulse response waveform, power due to mode coupling becomes dominant. If the amount of mode coupling satisfies Expression (A) described above, it is possible to concentrate power due to mode coupling and to reliably and sufficiently reduce the DMD.

Since the longer the optical fiber, the greater the amount of mode coupling, in the above-described aspect, the longer the optical fiber, the higher the effect to reduce the DMD. Accordingly, the above-described aspect of the invention becomes advantageous in long-haul transmission compared to the related art (compensation transmission path, low DMD fiber, or the like) in which the longer the optical fiber, the greater the DMD.

Since the optical fiber according to the above-described aspects has a simple structure compared to a compensation transmission path having a structure in which two optical fibers are connected, the optical fiber is excellent in terms of ease of manufacturing, endurance, reduction of error factors, and the like.

According to the above-described aspects, since the amount of mode coupling between the two modes is equal to or greater than +14 [dB], in the normalized impulse response waveform, power due to mode coupling becomes dominant. If the amount of mode coupling satisfies Expression (A) described above, it is possible to concentrate power due to mode coupling and to reliably and sufficiently reduce the DMD.

Since the longer the optical fiber, the greater the amount of mode coupling, in the above-described aspect, the longer the optical fiber, the higher the effect to reduce the DMD. Accordingly, the above-described aspects become advantageous in long-haul transmission compared to the related art (compensation transmission path, low DMD fiber, or the like) in which the longer the optical fiber, the greater the DMD.

Since the optical fiber according to the above-described aspects has a simple structure compared to a compensation transmission path having a structure in which two optical fibers are connected, the optical fiber is excellent in terms of ease of manufacturing, endurance, reduction of error factors, and the like.

BRIEF DESCRIPTION OF DRAWINGS

FIG. 1A is a graph showing a normalized impulse response waveform in an optical fiber (weak coupling type) having a small mode coupling coefficient h.

FIG. 1B is a graph showing a normalized impulse response waveform in an optical fiber (strong coupling type) having a large mode coupling coefficient h.

FIG. 2 is a graph showing the relationship between the mode coupling coefficient h and an effective refractive index difference $\Delta n_{eff}$.

FIG. 3 is a sectional view showing an optical fiber of an embodiment not part of the claimed invention.

FIG. 4 is a sectional view showing an optical fiber of another embodiment not part of the claimed invention.

FIG. 5 is a graph showing a normalized impulse response waveform in the optical fiber of the example.

FIG. 6 is a graph showing a normalized impulse response waveform in the optical fiber of the example.

FIG. 7 is a graph showing a normalized impulse response waveform in the optical fiber of the example.

EMBODIMENTS FOR CARRYING OUT THE INVENTION

Hereinafter, the invention will be described based on a suitable embodiment of an optical fiber, not part of but useful to understand the claimed invention, referring to the drawings.

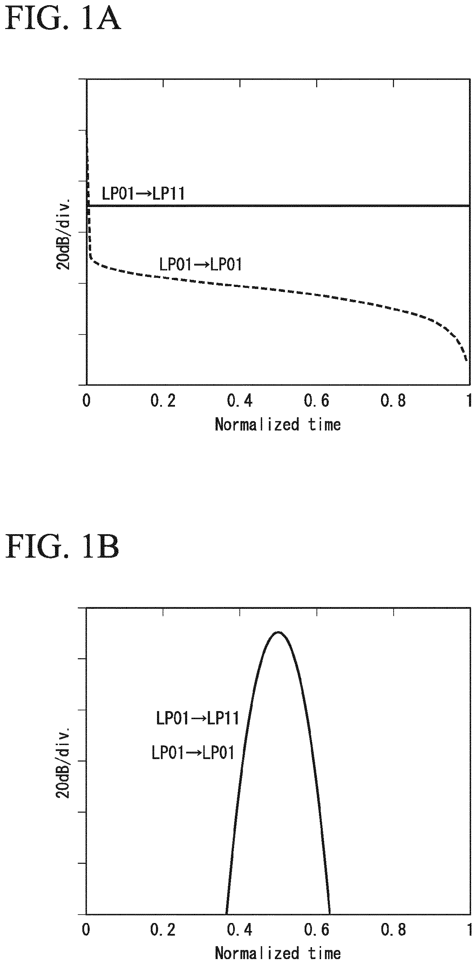

FIGS. 1A and 1B are diagrams showing a normalized impulse response waveform of an optical fiber according to this embodiment. A two-mode fiber which is a kind of FMF is provided as an example. In FIGS. 1A and 1B and FIGS. 5 to 7 described below, the horizontal axis indicates a normalized delay time $\tau$ represented by Expression (5) described below, and the vertical axis indicates a $P_i$ power profile represented by Expressions (1) to (4).

In this optical fiber, in a case where Mode 1 or Mode 2 is launched alone, an impulse response can be represented by Expressions (1) to (4) described below. Expressions (1) to (4) are theoretical expressions relating to an impulse response.

For Mode 1, Expressions (1) and (2) are established.

$$P_1(z,\tau) = \delta(\tau)\exp\{-(\alpha_1 + h)z\} + \left\{\frac{hn_0}{c\tau_g}\sqrt{\frac{1-\tau}{\tau}}I_1(X')\right\}\exp\{-(\alpha_1 + h)z\}\exp\{(\alpha_1 - \alpha_2)z\}$$

$$\cdots \quad (1)$$

$$P_2(z,\tau) = \left\{\frac{hn_0}{c\tau_g}I_0(X')\right\}\exp\{-(\alpha_1 + h)z\}\exp\{(\alpha_1 - \alpha_2)z\} \qquad \cdots \quad (2)$$

For Mode 2, Expressions (3) and (4) are established.

$$P_1(z,\tau) = \left\{h\left(1 + \frac{n_0}{c\tau_g}\right)I_0(X')\right\}\exp\{-(\alpha_2 + h)z\}\exp\{(\alpha_1 - \alpha_2)z\} \qquad \cdots \quad (3)$$

$$P_2(z,\tau) = \delta(1-\tau)\exp\{-(\alpha_2 + h)z\} + \left\{h\left(1 + \frac{n_0}{c\tau_g}\right)\sqrt{\frac{\tau}{1-\tau}}I_1(X')\right\}\exp\{-(\alpha_2 + h)z\}\exp\{(\alpha_1 - \alpha_2)z\}$$

$$\cdots \quad (4)$$

Furthermore, Expressions (5) and (6) described below are established.

$$\tau \equiv \frac{t - z/v_1}{z(1/v_2 - 1/v_1)} \ (v_1 > v_2) \qquad \cdots \quad (5)$$

$$X' \equiv 2hz\sqrt{\tau(1-\tau)} \qquad \cdots \quad (6)$$

$P_i$ is a power profile of Mode i (where i = 1 or 2). c is the velocity of light in vacuum. $n_0$ is a refractive index of a core. $\tau_g$ is a DMD. z is the length of the optical fiber. $\tau$ is a normalized delay time indicated by Expression (5). $v_i$ is a group velocity. $\alpha_i$ is transmission loss of Mode i. $\delta(x)$ is a $\delta$ function. $I_0$ is a zero-th order modified Bessel function of a first kind. $I_1$ is a first order modified Bessel function of a first kind. h is a mode coupling coefficient between two modes.

FIG. 1A shows a normalized impulse response waveform determined by Expressions (1) to (4) in a case where Mode 1 (LP01) is launched into an optical fiber (weak coupling type) having a comparatively small mode coupling coefficient h. h = $1.0 \times 10^{-5}$ [1/km] was set.

A solid line indicates Mode 2 (LP01 → LP11). A broken line indicates Mode 1 (LP01 → LP01). The transmission loss $\alpha_1 = \alpha_2 = 0.2$ [dB/km] was set. The DMD $\tau_g = 0.05$ [ns/km] was set. The optical fiber length z = 100 [km] was set.

The normalized impulse response waveform can be acquired by, for example, a network analyzer.

In this way, in the optical fiber (weak coupling type) having a small mode coupling coefficient h, a pulse corresponding to each mode and a belt-like power profile due to mode coupling are generated.

In a case where Mode 2 (LP11) is launched, a normalized impulse response waveform determined by Expressions (1) to (4) has a shape horizontally inverted from the waveform of FIG. 1A.

In a case where coupling between modes is small, a waveform which is obtained in a case where Mode 1 (LP01) and Mode 2(LP11) are launched has pulses corresponding to Modes 1 and 2 at two positions (for example, in FIG. 1A, a position where the delay time (horizontal axis) becomes 0 and a position where the delay time becomes 1) temporally separated from each other.

FIG. 1B shows a normalized impulse response waveform determined by Expressions (1) to (4) in a case where Mode 1 (LP01) is launched into an optical fiber (strong coupling type) having a comparatively large mode coupling coefficient h. h = 1.0 [1/km] was set.

A solid line indicates Mode 2 (LP01 → LP11). A broken line indicates Mode 1 (LP01 → LP01). In FIG. 1B, since the solid line and the broken line substantially have the same shape, the broken line becomes invisible behind the solid line.

In a case where Mode 2 (LP11) is launched, a normalized impulse response waveform determined by Expressions (1) to (4) has a shape horizontally inverted from the waveform of FIG. 1B, that is, substantially the same shape as the waveform of FIG. 1B.

As shown in FIG. 1B, in the optical fiber (strong coupling type) having a large mode coupling coefficient h, a pulse corresponding to each mode becomes small (or vanishes), and power due to mode coupling becomes dominant.

In the normalized impulse response waveform, the relative position of power due to mode coupling with respect to the two pulses corresponding to the respective modes is intermediate between the two pulses.

Since the longer the optical fiber, of course, the greater the total amount of mode coupling, the optical fiber length becomes a parameter effective for realizing strong coupling.

The amount (XT) of mode coupling, that is, the amount of coupling between the two modes is represented by Expression (7) described below.

$$XT = 10 \cdot \log_{10}(zh) \, [dB] \ldots (7)$$

The amount (XT) of mode coupling satisfies Expression (A) described below.

$$XT \geq +14 \, [dB] \ldots (A)$$

An optical fiber in which the amount of mode coupling is within this range is a strong coupling type optical fiber, and in the normalized impulse response waveform, power due to mode coupling becomes dominant (see FIG. 1B).

If the amount of mode coupling satisfies Expression (A) described above, since the pulse corresponding to each mode becomes small (or vanishes), only one pulse due to mode coupling is substantially generated. For this reason, it is possible to concentrate power due to mode coupling and to reliably and sufficiently reduce the DMD.

A strong coupling type optical fiber also has the following advantage in regard to reduction in DMD.

In a compensation transmission path and a low DMD fiber, the longer the optical fiber, the greater the DMD.

In contrast, in a strong coupling type optical fiber, since the longer the optical fiber, the greater the amount of mode coupling (see Expression (7)), it is possible to concentrate power due to mode coupling. For this reason, it is possible to make the DMD smaller.

The longer the optical fiber is, the smaller the DMD, which brings a very significant advantage in long-haul transmission.

Since the strong coupling type optical fiber has a simple structure compared to a compensation transmission path having a structure in which two optical fibers are connected, the strong coupling type optical fiber is also excellent in terms of ease of manufacturing, endurance, reduction of error factors, and the like.

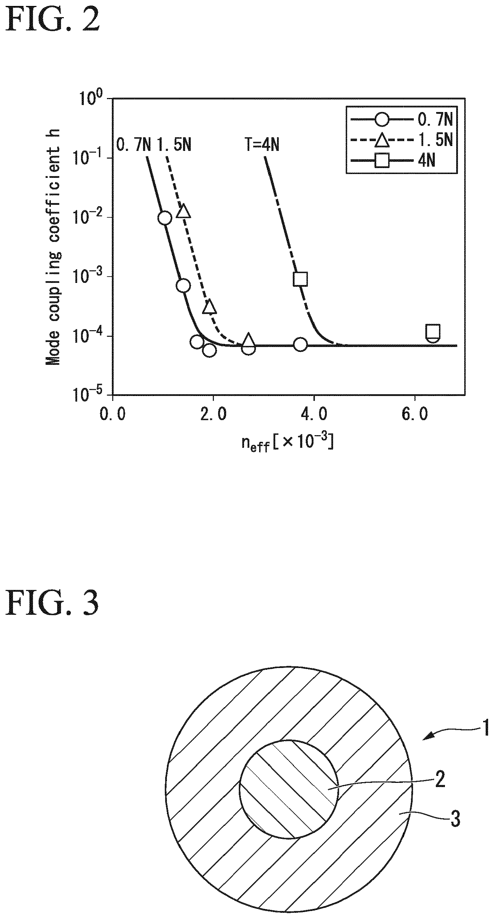

An optical fiber has a core, and a clad provided in the outer circumference of the core. FIG. 3 is an example of an optical fiber, and an optical fiber 1 shown in FIG. 3 has a core 2, and a clad 3 provided in the outer circumference of the core 2.

An optical fiber for communication is made of, for example, silica ($SiO_2$)-based glass, and generally has a structure in which a refractive index of a core is increased by doping germanium (Ge).

Next, a method, according to the claimed invention, of manufacturing an optical fiber of this embodiment will be described.

There are two kinds of Information necessary for designing a strong coupling type optical fiber as follows.

[1] The value of the mode coupling coefficient h at which a strong coupling type is made.

[2] A quantitative index of the relationship between the mode coupling coefficient h and the optical fiber characteristics.

For [1], the mode coupling coefficient h can be calculated by Expressions (1) to (4) described above.

For [2], a desired mode coupling coefficient h can be realized by setting an internal element or an external element of the optical fiber.

For example, as described below, since an effective refractive index difference $\Delta n_{eff}$ has a strong correlation with the mode coupling coefficient h, a desired mode coupling coefficient h can be realized by adjusting $\Delta n_{eff}$. The effective refractive index difference $\Delta n_{eff}$ is the difference in effective refractive index between two modes.

It is preferable that the effective refractive index difference $\Delta n_{eff}$ is equal to or less than $1.0 \times 10^{-3}$.

With $\Delta n_{eff}$ set within this range, since a higher mode coupling coefficient h is obtained, a strong coupling type optical fiber capable of reducing the DMD as described above is obtained.

Hereinafter, a first example of a method of manufacturing an optical fiber will be described. The first example uses a design method related to the internal element of the optical fiber. Here, the internal element is the refractive index of the core.

[Step 1] Selection of the mode coupling coefficient h at which a normalized impulse response waveform of a strong coupling type is obtained

In Step 1 (first step), the mode coupling coefficient h at which a normalized impulse response waveform of a strong coupling type is obtained is determined by Expressions (1) to (4).

For example, the mode coupling coefficient h at the optical fiber length z is determined by fitting a measured value to a normalized impulse response waveform obtained by Expressions (1) to (4) using a least-squares method or the like.

Next, it is determined whether the obtained waveform is a weak coupling type shown in FIG. 1A or a strong coupling type shown in FIG. 1B.

A procedure for acquiring a normalized impulse response waveform while changing the conditions and determining whether the waveform is a weak coupling type or a strong coupling type is repeated as necessary, and the mode coupling coefficient h at which a normalized impulse response waveform of a strong coupling type is obtained is determined.

As described above, a normalized impulse response waveform of a weak coupling type optical fiber has a pulse corresponding to each node, and a power profile due to mode coupling (see FIG. 1A).

On the other hand, in a normalized impulse response waveform of a strong coupling type optical fiber, a pulse corresponding to each mode becomes small, and power due to mode coupling becomes dominant (see FIG. 1B).

The recognition of a strong coupling type can be performed based on an impulse response waveform spread (a spread of a power level within a range of -20 [dB]), for example, when normalized with a delay time difference determined from the group velocity of each mode. For example, in a case where the impulse response waveform spread is equal to or less than 0.6, and preferably, is equal to or less than 0.3, the optical fiber can be recognized as a strong coupling type.

The mode coupling coefficient h determined in Step 1 is referred to as "$h_1$".

[Step 2] Determination of the effective refractive index difference $\Delta n_{eff}$

In Step 2 (second step), the effective refractive index difference $\Delta n_{eff}$ for obtaining the mode coupling coefficient $h_1$ determined in Step 1 is determined. The effective refractive index difference $\Delta n_{eff}$ for obtaining the mode coupling coefficient $h_1$ is referred to as "$\Delta n_{eff1}$".

FIG. 2 is a diagram showing the relationship between the mode coupling coefficient h and the effective refractive index difference $\Delta n_{eff}$.

In FIG. 2, a solid line indicates the relationship between the mode coupling coefficient h and the effective

refractive index difference $\Delta n_{eff}$ in a case where tension applied to the optical fiber has the same value (0.7 N) as tension in a general installation state of the optical fiber.

The effective refractive index difference $\Delta n_{eff1}$ for obtaining the mode coupling coefficient $h_1$ can be determined based on this relationship.

It is preferable that data relating to the relationship between the mode coupling coefficient h and the effective refractive index difference $\Delta n_{eff}$ is acquired in advance prior to Step 2.

[Step 3] Design of refractive index profile

In Step 3 (third step), the refractive index profile of the core is designed based on the effective refractive index difference $\Delta n_{eff1}$ determined in Step 2.

It is preferable that the refractive index profile of the core has a ring shape. The refractive index profile having a ring shape is advantageous for obtaining a small effective refractive index difference $\Delta n_{eff}$ (see NPL 7).

The refractive index profile of the core is not limited to a ring shape, and may have a step index shape, may be an $\alpha$-power profile, or may have a graded index shape.

Next, an optical fiber is manufactured based on the designed refractive index profile.

As a method of manufacturing an optical fiber, there are techniques, such as vapor phase axial deposition (VAD), outside vapor deposition (OVD), and chemical vapor deposition (CVD), or the like. As the CVD method, there are a modified chemical vapor deposition (MCVD) method and a plasma chemical vapor deposition (PCVD) method.

With this, the optical fiber (strong coupling type optical fiber) having the mode coupling coefficient $h_1$ is obtained.

Next, a second example of a method, according to the claimed invention, of manufacturing an optical fiber will be described. The second example uses a design method related to the external element of the optical fiber.

[Step 1] Selection of the mode coupling coefficient h at which a normalized impulse response waveform of a strong coupling type is obtained

Step 1 (first step) is the same as Step 1 of the manufacturing method of the first example.

[Step 2] Design of external element

In Step 2 (second step), an external element for obtaining the mode coupling coefficient $h_1$ determined in Step 1 is designed.

The external element used herein is an external element in which an influence is possibly incurred to the mode coupling coefficient h of the optical fiber, and for example, an element in which an influence is possibly incurred to a fluctuation component in a longitudinal direction of the optical fiber is considered.

The element in which an influence is possibly incurred to the fluctuation component in the longitudinal direction of the optical fiber is, for example, an element in which a variation is possibly incurred to a power spectrum of the fluctuation component.

For example, the power spectrum of the fluctuation component can be varied by applying a span to the optical fiber. The span is twist as plastic deformation generated by applying force around an axis to the optical fiber during fiber drawing.

The fluctuation component in the longitudinal direction of the optical fiber is adjusted by the span, whereby it is possible to obtain a desired mode coupling coefficient h.

As an element in which an influence is incurred to the fluctuation component, in addition to the span, tension applied to the optical fiber can be considered.

Tension can be applied in the longitudinal direction of the optical fiber when mounting the optical fiber in an optical fiber cable.

If tension is applied, since the fluctuation component in the longitudinal direction of the optical fiber is shifted by elastic deformation of the optical fiber, it is possible to increase the mode coupling coefficient h (that is, to make a strong coupling type) even in an optical fiber which has a large effective refractive index difference $\Delta n_{eff}$ to a certain extent.

The influence of tension is shown in FIG. 2. In FIG. 2, a solid line, a broken line, and a one-dot-chain line respectively indicate the relationship between the mode coupling coefficient h and the effective refractive index difference $\Delta n_{eff}$ in a case where tension applied to the optical fiber is 0.7 N, 1.5 N, and 4 N.

As shown in FIG. 2, the relationship between the mode coupling coefficient h and the effective refractive index different $\Delta n_{eff}$ is changed by tension applied to the optical fiber. From FIG. 2, it is understood that, in a case where tension is high (for example, in a case of 4 N), it is possible to increase the mode coupling coefficient h (that is, to make a strong coupling type) even in an optical fiber which has a large effective refractive index difference $\Delta n_{eff}$ to a certain extent.

As an element in which an influence is incurred to the fluctuation component, there is also a coating layer of the optical fiber. The coating layer is formed, for example, by coating a coating material, such as urethane acrylate-based resin, on the outer surface of a bare optical fiber, or the like.

For example, high hardness particles are contained in the coating layer in a dispersion state, whereby it is possible to adjust the power spectrum of the fluctuation component of the optical fiber.

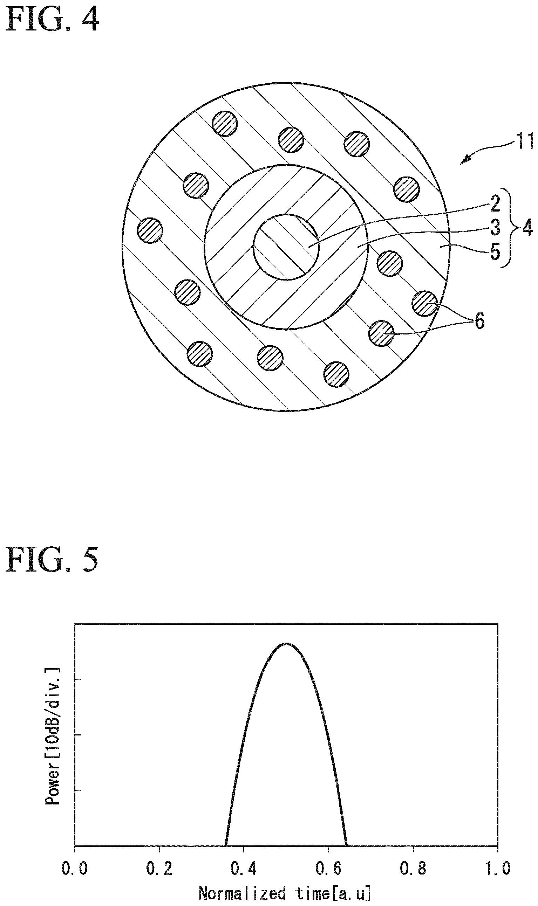

FIG. 4 shows an example of an optical fiber having a coating layer, and an optical fiber 11 shown in FIG. 4 has a coating layer 5 formed on the outer circumference of a bare optical fiber 4. The bare optical fiber 4 has a core 2, and a clad 3 provided on the outer circumference of the core 2.

The coating layer 5 contains multiple particles 6 in a dispersion state. The coating layer 5 is made of, for example, resin, such as urethane acrylate-based resin. The particles 6 are made of, for example, a material having hardness higher than the coating layer 5, for example, resin, ceramic, or the like.

As an external element, one of a span applied to the optical fiber, tension applied to the optical fiber, and the coating layer may be used alone, or two or more of them may be used.

In this way, it is possible to adjust the fluctuation component of the optical fiber by setting the external element (for example, span, tension, coating layer, or the like) of the optical fiber, and to obtain an optical fiber (strong coupling type optical fiber) in which the mode coupling coefficient $h_1$ is obtained.

An external element is not limited to an element which an influence is possibly incurred to the fluctuation component in the longitudinal direction of the optical fiber as long as the mode coupling coefficient h can be adjusted.

In the optical fiber described above, since the amount of mode coupling between the two modes is equal to or greater than +14 [dB], in the normalized impulse response waveform, power due to mode coupling becomes dominant (see FIG. 1B). If the amount of mode coupling satisfies Expression (A) described above, it is possible to concentrate power due to mode coupling and to reliably and sufficiently reduce the DMD.

In the optical fiber described above, since the longer the optical fiber, the greater the amount of mode coupling (see Expression (7)), the longer the optical fiber, the higher the effect to reduce the DMD. Accordingly, it is advantageous in long-haul transmission compared to the related art (compensation transmission path, low DMD fiber, or the like) in which the longer the optical fiber, the greater the DMD.

Since the optical fiber described above has a simple structure compared to a compensation transmission path having a structure in which two optical fibers are connected, the optical fiber is excellent in terms of ease of manufacturing, endurance, reduction of error factors, and the like.

The optical fiber can be used in an optical fiber transmission path, and in particular, an optical fiber transmission path in which MDM is performed.

In an optical fiber transmission path in which MDM transmission is performed, in order to put a signal on each propagation mode, in general, a mode multiplexing device (MUX) or a mode demultiplexing device (DeMUX) is used. In order to increase the capacity of the transmission path, it is preferable to use MDM transmission along with wavelength division multiplexing (WDM). The optical fiber according to the embodiment of the invention is useful for realizing a low DMD and is suitable for MDM transmission using MIMO. In a case where two or more kinds of optical fibers, in which the signs of the DMDs are reversed, are connected in series in the transmission path, it is possible to reduce the DMD of the entire transmission path by adjusting the ratio of the lengths of the respective optical fibers.

The refractive index profile having a ring shape is, for example, a refractive index profile which has two or more layers, which have a (concentric) ring shape in a sectional form and have different refractive indexes, and in which the refractive index of one of layers other than a layer including the core center becomes the maximum.

The $\alpha$-power profile refers to, for example, a refractive index profile in which, when a maximum refractive index at the center is $n_1$, a minimum refractive index in the outer circumference is $n_2$, the distance from the center of the optical fiber is r, a core radius is a, a shape coefficient of the refractive index profile is $\alpha$, and a relative refractive index difference is $\Delta$, the refractive index n(r) of the core at the distance r (however, $0 \leq r \leq a$) can be normalized by Expression (8) described below.

$$n(r) = n_1[1\text{-}2\Delta(r/a)^{\alpha}]^{1/2} \ \ldots \ (8)$$

Although the invention has been described based on the preferred embodiment, the invention is not limited to the above-described embodiment, and various alterations can be made without departing from the subject matter of the invention.

The optical fiber manufactured by a method according to the invention is not limited to a two-mode fiber which allows propagation of two modes. The optical fiber manufactured by a method according to the invention may be an optical fiber in which two or more modes, for example, four modes or a larger number of modes are propagated.

In a case of an optical fiber in which a larger number of modes than two are propagated, the amount of coupling between at least two modes among a larger number of modes than two satisfies Expression (A) described above.

In a case where tension applied to the optical fiber is used as the external element, it is possible to provide a method of laying an optical fiber which has the first and second steps and in which the external element is tension applied to the optical fiber. Furthermore, it is possible to provide a method of manufacturing an optical fiber cable which has the first and second steps and in which the external element is tension applied to the optical fiber.

The optical fiber cable has a structure having one or two or more optical fibers, and a sheath which covers the optical fibers.

[Examples]

Hereinafter, the invention will be described specifically in connection with examples not part of but useful to understand the claimed invention.

(Example 1)

FIG. 5 shows a normalized impulse response waveform obtained in an optical fiber having the following characteristics.

$$h = 2 \text{ [1/km], the DMD } \tau_g = 0.05 \text{ [ns/km], the transmission loss } \alpha_1 = \alpha_2 = 0.2$$

$$\text{[dB/km], the optical fiber length z = 100 [km], the velocity c of light in vacuum = 2.998}$$

$$\times 10^8 \text{ [m/s], the refractive index } n_0 \text{ of the core = 1.45, and the amount XT of mode}$$

$$\text{coupling = +23 [dB].}$$

From the relationship between the mode coupling coefficient h and the effective refractive index difference $\Delta n_{eff}$ shown in FIG. 2, $\Delta n_{eff}$ for obtaining h = 2 [1/km] is $3.4 \times 10^{-4}$.

(Comparative Example 1)

FIG. 1A shows a normalized impulse response waveform of a weak coupling type optical fiber which is the same as in Example 1, except that the mode coupling coefficient h is smaller (in detail, h = $1.0 \times 10^{-5}$ [1/km]) than the mode coupling coefficient h in Example 1. The amount XT of mode coupling = -30 [dB].

In Example 1 which relates to a strong coupling type optical fiber, the delay time is 100 [km] $\times$ 0.05 [ns/km] $\times$ 0.2 = 1 [ns]. In this expression, "0.2" is a coefficient based on a spread of a power level within a range of -20 [dB] in FIG. 5.

In Comparative Example 1 (see FIG. 1A) which relates to a weak coupling type optical fiber, the delay time becomes 100 [km] $\times$ 0.05 [ns/km] = 5 [ns].

In this way, in Example 1, it has been understood that the DMD can be reduced significantly.

(Example 2)

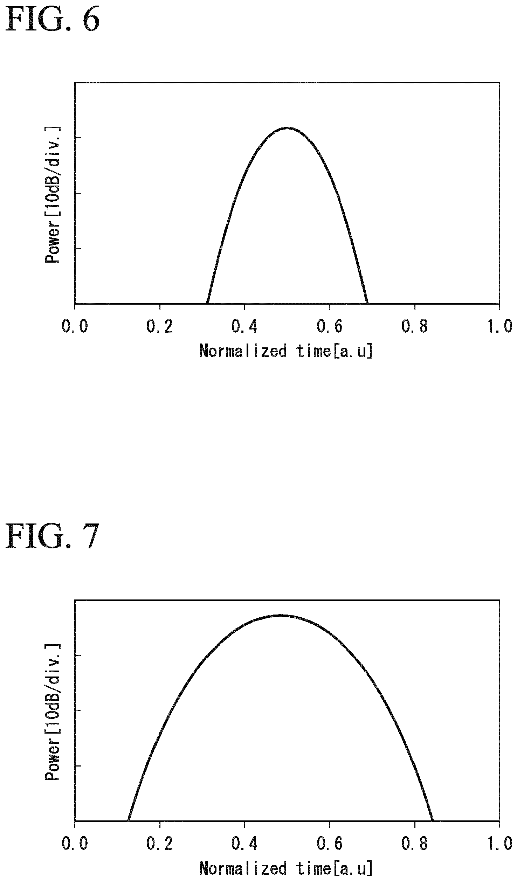

FIG. 6 shows a normalized impulse response waveform obtained in an optical fiber having the following characteristics.

h = $1 \times 10^{-2}$ [1/km], the DMD $\tau_g$ = 0.1 [ns/km], the optical fiber length z = 10000 [km], and the amount XT of mode coupling = +20 [dB]. Other characteristics are the same as those in Example 1.

From the relationship between the mode coupling coefficient h and the effective refractive index difference $\Delta n_{eff}$ shown in FIG. 2, $\Delta n_{eff}$ for obtaining h = $1 \times 10^{-2}$ [1/km] is $1.0 \times 10^{-3}$.

(Comparative Example 2)

Comparative Example 2 relates to a weak coupling type optical fiber which is the same as in Example 2, except that the mode coupling coefficient h is smaller (in detail, h = $1.0 \times 10^{-5}$ [1/km]) than the mode coupling coefficient h in Example 2. The amount XT of mode coupling = -10 [dB].

In Example 2, the delay time is 10000 [km] $\times$ 0.1 [ns/km] $\times$ 0.3 = 300 [ns]. In this expression, "0.3" is a coefficient based on a spread of a power level within a range of -20 [dB] in FIG. 6.

In Comparative Example 2, the delay time becomes 10000 [km] $\times$ 0.1 [ns/km] = 1000 [ns].

In this way, in Example 2, it has been understood that the DMD can be reduced significantly.

(Example 3)

FIG. 7 shows a normalized impulse response waveform obtained in an optical fiber having the following characteristics.

$h = 3 \times 10^{-2}$ [1/km], the DMD $\tau_g$ = 0.2 [ns/km], the optical fiber length z = 1000 [km], and the amount XT of mode coupling = +14.8 [dB]. Other characteristics are the same as those in Example 1.

From the relationship between the mode coupling coefficient h and the effective refractive index difference $\Delta n_{eff}$ of FIG. 2, $\Delta n_{eff}$ for obtaining $h = 3 \times 10^{-2}$ [1/km] is $9.0 \times 10^{-4}$.

(Comparative Example 3)

Comparative Example 3 relates to a weak coupling type optical fiber which is the same as in Example 3, except that the mode coupling coefficient h is smaller (in detail, $h = 1.0 \times 10^{-5}$ [1/km]) than the mode coupling coefficient h in Example 3. The amount XT of mode coupling = -20 [dB].

In Example 3, the delay time is 1000 [km] $\times$ 0.2 [ns/km] $\times$ 0.5 = 100 [ns]. In this expression, "0.5" is a coefficient based on a spread of a power level within a range of -20 [dB] in FIG. 7.

In Comparative Example 3, the delay time becomes 1000 [km] $\times$ 0.2 [ns/km] = 200 [ns].

In this way, in Example 3, it has been understood that the DMD can be reduced significantly.

DESCRIPTION OF THE REFERENCE SYMBOLS

1,11: optical fiber, 2: core, 3: clad, 5: coating layer.

**Claims**

1. A method of manufacturing an optical fiber (1, 11) which allows propagation of two or more modes,

    wherein the amount XT of coupling between the two modes satisfies Expression (A):

$$XT = 10 \cdot \log_{10}(zh) \text{ [dB]}; XT \geq +14 \text{ [dB]} \ldots \text{(A)};$$

    wherein h [1/km] represents a mode coupling coefficient between at least two modes among the two or more modes, and z [km] represents a length of the optical fiber,
    the method comprising:

      a first step of determining, based on a theoretical expression relating to an impulse response, a mode coupling coefficient such that a normalized impulse response waveform, in which the amount of coupling between the modes satisfies Expression (A), is obtained;
      a second step of determining an effective refractive index difference for obtaining the mode coupling coefficient determined in the first step based on the relationship between a mode coupling coefficient and the effective refractive index difference between two modes acquired in advance; and
      a third step of designing a refractive index profile of a core of the optical fiber based on the effective refractive index difference determined in the second step.

2. A method of manufacturing an optical fiber (1, 11) which allows propagation of two or more modes,

    wherein the amount XT of coupling between the two modes satisfies Expression (A):

$$XT = 10 \cdot \log_{10}(zh) \text{ [dB]}; XT \geq +14 \text{ [dB]} \ldots \text{(A)};$$

    wherein h [1/km] represents a mode coupling coefficient between at least two modes among the two or more modes, and z [km] represents a length of the optical fiber,
    the method comprising:

      a first step of determining, based on a theoretical expression relating to an impulse response, a mode coupling coefficient such that a normalized impulse response waveform, in which the amount of coupling between the modes satisfies Expression (A), is obtained; and

a second step of designing an external element for obtaining the mode coupling coefficient determined in the first step,

wherein the external element is an element in which an influence is possibly incurred to a fluctuation component in a longitudinal direction of the optical fiber.

3.  The method according to claim 2,
    wherein the external element is one or two or more selected from:

    a twist as plastic deformation generated by applying force around an axis to the optical fiber,
    tension applied to the optical fiber, and
    a coated layer of the optical fiber.

**Patentansprüche**

1.  Verfahren zum Herstellen einer optischen Faser (1, 11), die eine Ausbreitung von zwei oder mehr Modi ermöglicht,

    wobei der Kopplungsbetrag XT zwischen den zwei Modi den Ausdruck (A) erfüllt:

    $$XT = 10 \cdot \log_{10}(zh) \text{ [dB]}; XT \geq +14 \text{ dB ... (A)}$$

    wobei h [1/km] einen Moduskopplungskoeffizient zwischen mindestens zwei Modi aus den zwei oder mehr Modi darstellt und z [km] eine Länge der optischen Faser darstellt,
    wobei das Verfahren umfasst:

    einen ersten Schritt eines Bestimmens, basierend auf einem theoretischen Ausdruck, der sich auf eine Impulsantwort bezieht, eines Moduskopplungskoeffizienten, so dass eine normalisierte Impulsantwortwellenform erhalten wird, in der der Kopplungsbetrag zwischen den Modi den Ausdruck (A) erfüllt;
    einen zweiten Schritt eines Bestimmens einer effektiven Brechungsindexdifferenz zum Erhalten des Moduskopplungskoeffizienten, der im ersten Schritt bestimmt wurde, basierend auf der Beziehung zwischen einem Moduskopplungskoeffizienten und der effektiven Brechungsindexdifferenz zwischen zwei im Voraus erfassten Modi; und
    einen dritten Schritt eines Entwerfens eines Brechungsindexprofils eines Kerns der optischen Faser basierend auf der effektiven Brechungsindexdifferenz, die im zweiten Schritt bestimmt wurde.

2.  Verfahren zum Herstellen einer optischen Faser (1, 11), die eine Ausbreitung von zwei oder mehr Modi ermöglicht,

    wobei der Kopplungsbetrag XT zwischen den zwei Modi den Ausdruck (A) erfüllt:

    $$XT = 10 \cdot \log_{10}(zh) \text{ [dB]}; XT \geq +14 \text{ dB ... (A)}$$

    wobei h [1/km] einen Moduskopplungskoeffizient zwischen mindestens zwei Modi aus den zwei oder mehr Modi darstellt und z [km] eine Länge der optischen Faser darstellt,
    wobei das Verfahren umfasst:

    einen ersten Schritt eines Bestimmens, basierend auf einem theoretischen Ausdruck, der sich auf eine Impulsantwort bezieht, eines Moduskopplungskoeffizienten, so dass eine normalisierte Impulsantwortwellenform erhalten wird, in der der Kopplungsbetrag zwischen den Modi den Ausdruck (A) erfüllt; und
    einen zweiten Schritt eines Entwerfens eines externen Elements zum Erhalten des im ersten Schritt bestimmten Moduskopplungskoeffizienten,
    wobei das externe Element ein Element ist, in dem möglicherweise ein Einfluss auf eine Schwankungskomponente in einer Längsrichtung der optischen Faser entstanden ist.

**3.** Verfahren nach Anspruch 2,
wobei das externe Element eines oder zwei oder mehr ist, ausgewählt aus:

einer Drehung als plastische Verformung, die durch Aufbringen einer Kraft um eine Achse auf die optische Faser erzeugt wird,
einer auf die optische Faser ausgeübten Spannung und
einer Beschichtungsschicht der optischen Faser.

**Revendications**

**1.** Procédé de fabrication d'une fibre optique (1, 11) qui permet la propagation de deux modes ou plus,

dans lequel la quantité XT de couplage entre les deux modes satisfait l'expression (A) :

$$XT = 10 \cdot \log_{10}(zh) \, [dB]; \, XT \geq +14 \, [dB] \, \ldots \, (A) \,;$$

dans lequel h [1/km] représente un coefficient de couplage de mode entre au moins deux modes parmi les deux modes ou plus, et z [km] représente une longueur de la fibre optique,
le procédé comprenant :

une première étape de détermination, d'après une expression théorique relative à une réponse impulsionnelle, d'un coefficient de couplage de mode de telle sorte qu'une forme d'onde de réponse impulsionnelle normalisée, dans laquelle la quantité de couplage entre les modes satisfait l'expression (A), est obtenue ;
une deuxième étape de détermination d'une différence d'indice de réfraction effectif pour obtenir le coefficient de couplage de mode déterminé à la première étape d'après la relation entre un coefficient de couplage de mode et la différence d'indice de réfraction effectif entre deux modes acquis à l'avance ; et
une troisième étape de conception d'un profil d'indice de réfraction d'un cœur de la fibre optique d'après la différence d'indice de réfraction effectif déterminée à la deuxième étape.

**2.** Procédé de fabrication d'une fibre optique (1, 11) qui permet la propagation de deux modes ou plus,

dans lequel la quantité XT de couplage entre les deux modes satisfait l'expression (A) :

$$XT = 10 \cdot \log_{10}(zh) \, [dB]; \, XT \geq +14 \, [dB] \, \ldots \, (A) \,;$$

dans lequel h [1/km] représente un coefficient de couplage de mode entre au moins deux modes parmi les deux modes ou plus, et z [km] représente une longueur de la fibre optique,
le procédé comprenant :

une première étape de détermination, d'après une expression théorique relative à une réponse impulsionnelle, d'un coefficient de couplage de mode de telle sorte qu'une forme d'onde de réponse impulsionnelle normalisée, dans laquelle la quantité de couplage entre les modes satisfait l'expression (A), est obtenue ; et
une deuxième étape de conception d'un élément externe pour obtenir le coefficient de couplage déterminé à la première étape,
dans lequel l'élément externe est un élément dans lequel une composante de fluctuation est susceptible de subir une influence dans une direction longitudinale de la fibre optique.

**3.** Procédé selon la revendication 2,
dans lequel l'élément externe est un ou deux éléments ou plus sélectionnés parmi :

une torsion sous forme de déformation plastique générée par l'application d'une force autour d'un axe à la fibre optique,
une tension appliquée à la fibre optique, et
une couche revêtue de la fibre optique.

## FIG. 1A

## FIG. 1B

# FIG. 2

# FIG. 3

## FIG. 4

## FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015051376 A

**Non-patent literature cited in the description**

- **T. SAKAMOTO et al.** Differential Mode Delay Managed Transmission Line for Wide-band WDM-MIMO System. *OFC/NFOEC 2012 OM2D.1,* 2012
- **S. RANDEL et al.** Mode-Multiplexed 6×20-GBd QPSK Transmission over 1200-km DGD-Compensated Few-Mode Fiber. *OFC/NFOEC 2012 PDP5C.5,* 2012
- **R. MARUYAMA et al.** Novel two-mode optical fiber with low DMD and large Aeff for MIMO processing. *OECC 2012, PDP2-3,* 2012
- **T. MORI et al.** Six-LP-mode transmission fiber with DMD of less than 70 ps/km over C+L band. *OFC 2014, M3F.3,* 2014
- **P. SILLARD et al.** Low-DMGD 6-LP-Mode Fiber. *OFC 2014, M3F.2,* 2014
- **S. WARM et al.** *Optics Express,* 2013, vol. 21 (1), 519-532
- **NICOLAS K. FONTAINE et al.** *Summer Topicals,* 2013
- **JIN X Q et al.** Linearly polarized mode division multiplexed transmission over ring-index multimode fibres. *2013 IEEE PHOTONICS SOCIETY SUMMER TOPICAL MEETING SERIES,* 08 July 2013, 113-114